# FASCICULE DE BREVET EUROPEEN

(11) **EP 2 171 527 B1**
(45) Date de publication et mention de la délivrance du brevet: **04.09.2019**
(21) Numéro de dépôt: 08827636.5
(22) Date de dépôt: 04.07.2008
(51) Int. Cl.: G02C 13/00

(54) **PROCÉDÉ DE MESURE D'AU MOINS UN PARAMÈTRE GÉOMÉTRICO-PHYSIONOMIQUE D'IMPLANTATION D'UNE MONTURE DE LUNETTES DE CORRECTION VISUELLE SUR LE VISAGE D'UN PORTEUR**
VERFAHREN ZUR MESSUNG MINDESTENS EINES GEOMETRISCHEN/PHYSIOGNOMISCHEN PARAMETERS ZUR ANPASSUNG EINES GESTELLS EINER SEHKORREKTURBRILLE AM GESICHT EINES BENUTZERS
METHOD FOR MEASURING AT LEAST ONE GEOMETRICAL/PHYSIOGNOMICAL PARAMETER FOR THE FITTING OF A SIGHT CORRECTING GLASSES FRAME ON THE FACE OF A USER

(30) Priorité: 26.07.2007 FR 0705475; 30.08.2007 FR 0706081
(43) Date de publication de la demande: 07.04.2010
(73) Titulaire: Essilor International, 94220 Charenton-le-Pont (FR)
(72) Inventeur: BARANTON, Konogan, F-94220 Charenton Le Pont (FR)
(74) Mandataire: Jacobacci Coralis Harle
(86) Numéro de dépôt international: PCT/FR2008/000966
(87) Numéro de publication internationale: WO 2009/024681

(56) Documents cités:
- FR-A- 2 688 679
- FR-A- 2 719 463
- FR-A- 2 860 417
- FR-A- 2 860 887
- FR-A1- 2 768 236
- US-A- 4 653 881
- US-A1- 2004 189 935
- US-B1- 6 922 494

## Description

### DOMAINE TECHNIQUE AUQUEL SE RAPPORTE L'INVENTION

La présente invention concerne de manière générale la confection de lunettes de correction visuelle et plus précisément l'enregistrement des mesures géométrico-physionomiques effectuées par l'opticien sur le porteur équipé des montures qu'il a choisies pour déterminer des données relatives à la configuration d'implantation des verres correcteurs en regard des yeux du porteur.

### ARRIERE-PLAN TECHNOLOGIQUE

La confection d'une lentille correctrice de lunettes comporte, d'une part, la conception optique et la mise en forme des faces de réfraction de la lentille et, d'autre part, l'adaptation de la lentille à la monture choisie.

La présente invention traite de la mesure, sur le visage du porteur, de paramètres géométrico-physionomiques rendant compte de la configuration d'implantation des lunettes sur le visage du porteur. Ces paramètres sont susceptibles d'être exploités dans les deux étapes de confection d'une lentille correctrice, afin que la lentille exerce finalement la fonction optique corrective pour laquelle elle a été conçue et prescrite. Il s'agit par exemple des hauteurs des centres de rotation des yeux et de l'angle d'inclinaison pantoscopique que forme le plan général de la monture ou de la lentille par rapport à la verticale.

Pour être efficacement pris en compte, ces paramètres doivent être mesurés avec soin et précision, ce qui s'avère difficile en pratique. Pour rationaliser la prise de mesure, on a proposé d'effectuer celle-ci à partir de photographies numériques du visage du porteur équipé de la monture. Les écarts et hauteurs pupillaires sont ainsi, par exemple, mesurés par traitement d'une image numérique frontale du visage du porteur.

Un appareil de capture d'image connu, notamment du document US2004/189935, est monté sur une colonne de piètement assurant que l'axe optique de l'objectif de l'appareil de capture d'image reste horizontal. Le porteur peut alors placer ses yeux en correspondance d'une ouverture, en face de cet appareil de capture d'image. Un autre appareil de capture connu est monté mobile verticalement sur une colonne de piètement afin que l'axe optique de l'objectif de l'appareil de capture d'image puisse être ajusté à la même altitude que les yeux du porteur. Ces appareils de capture d'image permettent d'obtenir des mesures précises des paramètres géométrico-physionomiques du porteur.

Toutefois, le dispositif de prise de mesure qui en résulte s'avère relativement encombrant et peu ergonomique pour un usage dans un espace de vente. Le protocole de prise de mesure est perçu comme relativement contraignant, long et fastidieux tant par le porteur que par l'opticien. Ce dispositif est de plus très coûteux.

### OBJET DE L'INVENTION

Le but de la présente invention est de remédier à tout ou partie des inconvénients précités en proposant un procédé de mesure rapide et souple au moyen d'un appareil de capture d'image portable, sans colonne de piètement, permettant d'obtenir des mesures précises des paramètres géométrico-physionomiques du porteur.

A cet effet, on propose selon l'invention un procédé de mesure d'au moins un paramètre géométrico-physionomique d'implantation d'une monture de lunettes de correction visuelle sur le visage d'un porteur, conforme à la revendication 1.

Ce procédé met en oeuvre un appareil de capture d'image portable, donc peu encombrant, qui peut être un appareil de photographie numérique de poche du commerce de grand public, donc peu onéreux.

Afin de positionner l'appareil de capture d'image de sorte que la droite de visée soit horizontale, l'opérateur corrige l'angle d'assiette de l'appareil de capture d'image.

Les travaux de recherche de la demanderesse effectués dans le cadre de l'invention ont montré que l'utilisation d'un tel appareil de capture d'image portable pour la mesure des paramètres géométrico-physionomiques d'un porteur était rendue difficile en raison de l'imprécision des mesures obtenues. Ces travaux ont montré que cette imprécision était en grande partie due à des erreurs de parallaxe verticale lors de la capture de l'image qui diminuent en particulier la précision des mesures de la hauteur des pupilles par rapport à la monture choisie et de l'angle pantoscopique.

Le procédé selon l'invention garanti que la capture de l'image est réalisée dans une configuration où la droite d'observation de l'appareil de capture d'image est sensiblement horizontale, c'est-à-dire horizontale à +/- 5 degrés d'angle près. Ceci évite toute erreur de parallaxe verticale lors de la capture de l'image qui risquerait autrement d'affecter en particulier les mesures des hauteurs d'oeil, et permet d'obtenir, après traitement de l'image, une mesure précise des paramètres géométrico-physionomiques cherchés.

Selon une première famille de modes de réalisation du procédé qui ne sont pas revendiqués, pour positionner l'appareil de capture d'image dans la première configuration, l'opérateur ajuste l'altitude de l'appareil de capture d'image au moyen d'un dispositif d'assistance visuelle comportant au moins un objet lumineux monté en pendule soit sur l'appareil de capture d'image soit directement ou indirectement sur la tête du porteur.

Un objet lumineux est ici défini comme un objet source directe ou indirecte de lumière. Il peut s'agir d'une source active de lumière (lampe blanche, diode, source infrarouge par exemple), d'un objet réfléchissant (miroir par exemple) ou bien d'un objet diffusant la lumière ambiante.

Un objet est dit monté en pendule lorsqu'il est monté pour pivoter autour d'un axe de pivotement horizontal et qu'il est rappelé, typiquement par gravité ou effet gyroscopique ou équivalent, dans une position absolue prédéterminée par rapport à l'horizontale. De préférence, un moyen d'amortissement est prévu pour amortir le pivotement de l'objet lumineux et assurer ainsi sa stabilisation rapide ou son maintien stable dans sa position de rappel.

Le positionnement de l'appareil de capture d'image se fait alors simplement et rapidement grâce à ce dispositif d'assistance qui permet à l'opérateur d'ajuster manuellement et rapidement, à la vue, la pupille de cet appareil sensiblement à la même altitude que les yeux du porteur, sans avoir de mesures à effectuer.

Selon une caractéristique avantageuse de la première famille de modes de réalisation de l'invention, l'objet lumineux étant une source active d'étendue limitée au moins dans la direction verticale ou un objet réfléchissant monté en pendule directement ou indirectement sur la tête du porteur, et l'opérateur visualisant en temps réel une image à capturer sur des moyens de visualisation de l'appareil de capture d'image, cet opérateur ajuste l'altitude de l'appareil de capture d'image de telle sorte que l'image dudit objet lumineux soit visible sur l'image à capturer.

La source lumineuse directive active peut par exemple être un pointeur lumineux. Le faisceau lumineux est directif, c'est-à-dire ici de faible étendue dans la direction verticale. L'altitude du pointeur par rapport aux yeux du porteur et la direction du faisceau lumineux sont prédéterminées pour que, à la distance usuelle de capture d'image, si le faisceau est visible sur les moyens de visualisation de l'appareil, cela signifie que la pupille de l'appareil et les yeux du porteur sont sensiblement à la même altitude.

L'objet réfléchissant peut être un petit miroir dont l'altitude par rapport aux yeux du porteur est prédéterminée de telle sorte que le reflet dans ce miroir d'un repère prédéfini situé sur l'appareil de capture d'image n'est visible sur les moyens de visualisation de l'appareil de capture d'image que si la pupille de l'appareil de capture d'image et les yeux du porteur sont sensiblement à la même altitude. Ledit repère peut avantageusement être un objet lumineux.

Selon une autre caractéristique avantageuse de la première famille de modes de réalisation de l'invention, l'objet lumineux étant une source active ou un objet diffusant monté en pendule directement ou indirectement sur la tête du porteur, et l'opérateur visualisant en temps réel une image à capturer sur les moyens de visualisation, cet opérateur ajuste l'altitude de l'appareil de capture d'image de telle sorte que l'image de l'objet lumineux soit visible sur l'image à capturer, et que l'image de cet objet lumineux visualisée sur les moyens de visualisation présente des caractéristiques géométriques de formes et/ou de dimensions et/ou de couleurs prédéfinies.

La source lumineuse active ou l'objet diffusant peut par exemple être un prisme présentant des faces supérieures et inférieures de couleurs différentes. Selon la taille des surfaces de chaque couleur vues sur les moyens de visualisation de l'appareil de capture d'image, l'opérateur peut alors évaluer l'altitude de la pupille de l'appareil de capture d'image par rapport à celle de ce prisme et la corriger de façon à ce que la pupille de l'appareil de capture d'image se trouve sensiblement à la même altitude que les yeux du porteur.

Avantageusement alors, l'objet lumineux est situé à une distance inférieure à 10 centimètres des yeux du porteur ou telle qu'une droite d'orientation reliant un centre optique de cet objet lumineux et la pupille de l'appareil de capture d'image placé à la même altitude que les yeux du porteur forme avec sa projection dans un plan horizontal un angle compris entre +5 et -5 degrés.

Cette position de l'objet lumineux par rapport aux yeux du porteur et à la pupille de l'appareil de capture d'image assure que le procédé permet de placer les yeux du porteur et la pupille de l'appareil de capture d'image sensiblement à la même altitude.

Selon une autre caractéristique avantageuse de la première famille de modes de réalisation de l'invention, l'objet lumineux étant un objet réfléchissant monté en pendule sur l'appareil de capture d'image et situé devant ou à proximité de la pupille de l'appareil de capture d'image, l'opérateur ajuste l'altitude de l'appareil de capture d'image de telle sorte que le porteur voit le reflet de ses propres yeux dans ledit objet réfléchissant.

Avantageusement alors, l'objet réfléchissant est un miroir sans tain placé devant la pupille de l'appareil de capture d'image.

Le porteur indique à l'opérateur pour quelle altitude de l'appareil de capture d'image il voit ses yeux dans le miroir sans tain, et l'opérateur n'a plus qu'à déclencher la capture d'image. Ceci assure une horizontalité précise de la droite d'observation.

Selon une autre caractéristique avantageuse de la première famille de modes de réalisation de l'invention, l'objet lumineux étant une source lumineuse active d'étendue réduite selon la direction verticale montée en pendule sur l'appareil de capture d'image, l'opérateur ajuste l'altitude de l'appareil de capture d'image en ajustant l'altitude relative, d'une part, de la projection, sur le visage du porteur, du faisceau lumineux émis par l'objet lumineux, et, d'autre part, du point remarquable du visage du porteur.

L'opérateur n'a pas besoin d'utiliser les moyens de visualisation de l'appareil de capture d'image. L'ajustement est rapide.

Selon une autre caractéristique avantageuse de la première famille de modes de réalisation de l'invention, l'objet lumineux étant une source lumineuse active d'étendue réduite selon la direction verticale montée en pendule sur l'appareil de capture d'image et l'opérateur visualisant en temps réel une image à capturer sur les moyens de visualisation, l'opérateur ajuste l'altitude de l'appareil de capture d'image en ajustant la position verticale relative sur l'image à capturer, d'une part, de l'image de la projection sur le visage du porteur, du faisceau lumineux émis par l'objet lumineux et, d'autre part, de l'image du point remarquable du visage du porteur.

Selon une autre caractéristique avantageuse de la première famille de modes de réalisation de l'invention, le dispositif d'assistance visuelle comportant une source lumineuse active montée sur l'appareil de capture d'image et un objet réfléchissant monté en pendule directement ou indirectement sur la tête du porteur et l'opérateur visualisant en temps réel une image à capturer sur les moyens de visualisation, l'opérateur ajuste l'altitude de l'appareil de capture d'image de telle sorte que le reflet de ladite source lumineuse active dans ledit objet réfléchissant soit visible sur l'image à capturer.

L'objet réfléchissant peut être par exemple un petit miroir, un écran blanc, ou un film réfléchissant catadioptrique, dont l'altitude par rapport à la source lumineuse active, qui est par exemple une diode lumineuse montée sur l'appareil de capture numérique, est prédéterminée de sorte que, si le reflet de la diode est visible sur les moyens de visualisation de l'appareil de capture d'image, la pupille de l'appareil de capture d'image et les yeux du porteur sont sensiblement à la même altitude.

Selon une deuxième famille de modes de réalisation du procédé selon l'invention qui sont revendiqués, le positionnement manuel de l'appareil de capture d'image comporte la délivrance à l'opérateur d'une information de compensation d'un angle d'assiette formé entre un axe optique de l'appareil de capture d'image et sa projection dans un plan horizontal.

Afin de positionner l'appareil de capture d'image de sorte que la droite de visée soit horizontale, l'opérateur corrige l'angle d'assiette de l'appareil de capture d'image.

Avantageusement alors, le positionnement manuel de l'appareil de capture d'image comporte les sous-étapes suivantes :
a1) mesure, par un moyen de mesure d'inclinaison embarqué équipant l'appareil de capture d'image, de l'angle d'assiette,
a2) ajustement, par l'opérateur, de cet angle d'assiette,
a3) l'opérateur visualisant en temps réel une image à capturer sur des moyens de visualisation, ajustement, par l'opérateur, de l'altitude de l'appareil de capture d'image pour régler à une valeur donnée la position verticale relative d'un point remarquable de l'image à capturer du visage du porteur visualisée par l'opérateur sur des moyens de visualisation, par rapport à un référentiel des moyens de visualisation ou par rapport à l'image de la projection, sur le visage du porteur, d'un pointeur lumineux actif solidaire de l'appareil de capture d'image, ladite valeur donnée de position verticale étant définie, à l'étalonnage ou dynamiquement, en fonction de l'angle d'assiette après ajustement.

Ce moyen de mesure d'inclinaison peut être par exemple un inclinomètre électronique ou un niveau à bulle qui permet à l'opérateur d'ajuster l'angle d'assiette à une valeur donnée. L'opérateur corrige ensuite l'altitude de l'appareil de capture d'image afin de placer la pupille de l'appareil de capture d'image à la même altitude que le point remarquable du visage du porteur choisi, par exemple les yeux du porteur.

Pour cela, il peut ajuster par exemple la position verticale des images des yeux du porteur par rapport au référentiel d'un écran utilisé comme moyen de visualisation, ou ajuster la position verticale sur cette même image à capturer des images des yeux du porteur par rapport à la position verticale de l'image d'un faisceau lumineux projeté sur le visage du porteur par un pointeur lumineux actif solidaire de l'appareil de capture d'image.

L'ajustement de la position verticale des images des yeux du porteur dépend de l'angle d'assiette de l'appareil de capture d'image.

Selon une caractéristique avantageuse de la deuxième famille de modes de réalisation de l'invention, pour le positionnement manuel de l'appareil de capture d'image, l'opérateur ajuste l'angle d'assiette et ladite position verticale du point remarquable de l'image à capturer à des valeurs prédéterminées.

Afin de placer la droite d'observation de l'appareil de capture d'image dans une position sensiblement horizontale, l'opérateur positionne l'appareil de telle sorte que l'angle d'assiette et la position verticale des yeux du porteur sur l'image à capturer présentent des valeurs prédéterminées. Ces réglages peuvent être effectués dans n'importe quel ordre, ou simultanément.

Selon une autre caractéristique avantageuse de la deuxième famille de modes de réalisation de l'invention, pour le positionnement manuel de l'appareil de capture d'image, un moyen d'information dépendant du moyen de mesure d'inclinaison embarqué donne à l'opérateur une information sur la position angulaire de l'appareil de capture d'image par rapport à une valeur prédéterminée de l'angle d'assiette.

Un retour en temps réel est donné à l'opticien pour permettre un réglage aisé de l'angle d'assiette de l'appareil de prise de vue.

Selon une autre caractéristique avantageuse de la deuxième famille de modes de réalisation de l'invention, ladite valeur prédéterminée de l'angle d'assiette est nulle.

La capture de l'image est alors réalisée dans une configuration où l'axe optique de l'appareil de capture d'image est horizontal et où la pupille de cet appareil est sensiblement à la même altitude que les yeux du porteur.

Selon une autre caractéristique avantageuse de la deuxième famille de modes de réalisation de l'invention, l'ajustement d'altitude de l'appareil de capture d'image est réalisé par mise à la même position verticale, d'une part, d'une mire disposée sur les moyens de visualisation et, d'autre part, du point remarquable de l'image à capturer du visage du porteur visualisée par l'opérateur sur les moyens de visualisation.

Ainsi la position verticale relative des images des yeux du porteur sur les moyens de visualisation par rapport au référentiel des moyens de visualisation est facilement ajustée à une valeur précise en superposant les images des yeux du porteur et cette mire, dont la position est déterminée pour un angle d'assiette donné.

Selon une autre caractéristique avantageuse de la deuxième famille de modes de réalisation de l'invention, ladite mire est dynamiquement incrustée, par un moyen d'affichage numérique appartenant aux moyens de visualisation, sur l'image à capturer à une position verticale ajustée en temps réel par traitement numérique en fonction de l'angle d'assiette mesuré par le moyen de mesure d'inclinaison embarqué.

Ainsi l'angle d'assiette et la position verticale relative des images des yeux du porteur sur les moyens de visualisation par rapport au référentiel des moyens de visualisation sont simultanément ajustés en superposant les images des yeux du porteur et cette mire, dont la position verticale dans le référentiel des moyens de visualisation est ajustée en temps réel en fonction de l'angle d'assiette mesuré par l'inclinomètre.

Selon une autre caractéristique avantageuse de la deuxième famille de modes de réalisation de l'invention, l'ajustement d'altitude de l'appareil de capture d'image est réalisé par mise à la même position verticale, d'une part, de l'image de la projection, sur le visage du porteur, d'un pointeur actif solidaire de l'appareil de capture d'image et, d'autre part, du point remarquable de l'image à capturer du visage du porteur visualisée par l'opérateur sur les moyens de visualisation.

Ainsi l'altitude de l'appareil de capture d'image est facilement ajustée à une valeur précise en positionnant l'appareil de capture de telle sorte que le pointeur actif lumineux éclaire un point remarquable du visage du porteur déterminé pour un angle d'assiette donné.

Selon une autre caractéristique avantageuse des deux familles de modes de réalisation de l'invention, le porteur fixe du regard un point de visée formant avec un oeil du porteur une droite de visée sensiblement horizontale.

Avantageusement alors, le point de visée est porté par l'appareil de capture d'image et est séparé verticalement de la pupille de l'appareil de capture d'image d'une hauteur inférieure à 10 centimètres ou telle que, dans la première configuration, la droite visée forme avec sa projection sur un plan horizontal un angle inférieur ou égal à 6 degrés.

Ainsi, le porteur fixant le point de visée situé sur l'appareil de capture d'image, proche de la pupille de l'appareil, on peut donc considérer, par une approximation au premier ordre, que la droite d'observation est confondue avec la droite de visée. L'opérateur règle alors la hauteur et l'angle d'assiette de l'appareil pour que la droite d'observation et donc la droite de visée soient sensiblement horizontales. L'appareil de capture d'image se trouve alors à la même altitude que les yeux du porteur. Celui-ci se trouve alors de plus avantageusement dans une posture orthostatique naturelle.

### DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue de profil de la tête d'un porteur, équipée d'une paire de lunettes ;
- la figure 2 est une vue schématique générale en perspective d'un appareil de capture d'image utilisé pour réaliser la mesure de paramètres géométrico-physionomiques d'implantation des lunettes sur le visage du porteur conformément à l'invention ;
- les figures 3 à 7 sont des vues schématiques de détail en élévation de profil, aux proportions déformées pour en faciliter la lecture, illustrant la capture d'une image frontale de la monture et de l'oeil du porteur, selon différentes variantes d'une première famille de modes de réalisation du procédé de mesure conforme à l'invention ;
- les figures 8 à 10 sont des vues schématiques en élévation de profil, aux proportions déformées pour en faciliter la lecture, illustrant la capture d'une image frontale de la monture et de l'oeil, selon différentes variantes d'une deuxième famille de modes de réalisation du procédé de mesure conforme à l'invention.

On notera tout d'abord que les éléments communs aux différentes figures seront, dans la mesure du possible, repérés par des références identiques et ne seront pas décrits en détail pour chaque figure.

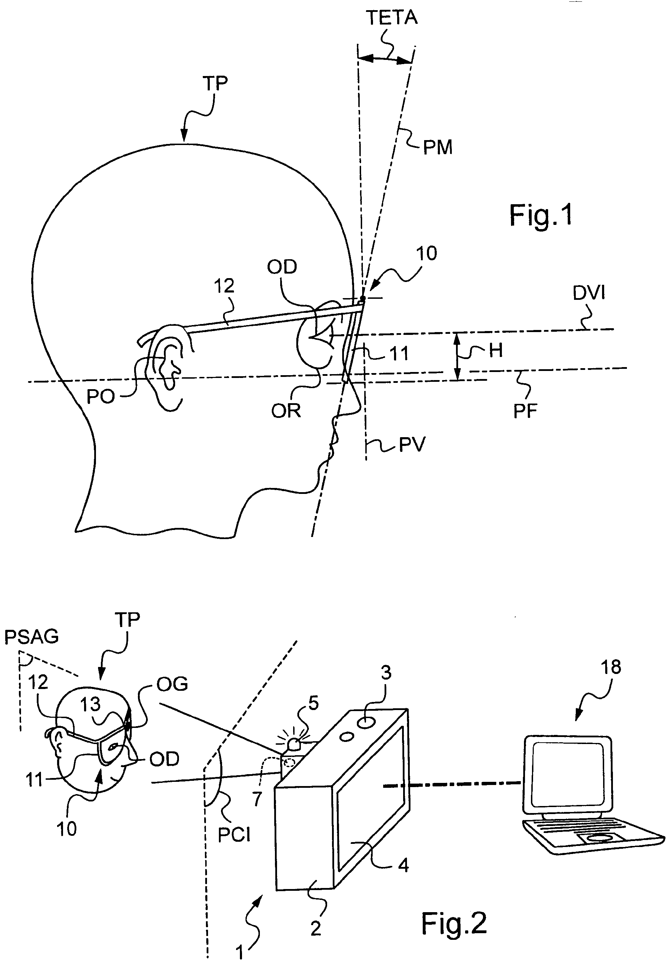

Comme représenté sur les figures 1 et 2, le porteur est équipé d'une monture 10 qu'il a préalablement choisie et sur laquelle seront montées des lentilles exerçant une fonction optique de correction visuelle conforme à une prescription. Cette monture 10 comporte classiquement deux cercles 11, reliés par un pontet nasal 13, et deux branches 12. Chaque cercle 11 est placé devant l'un des yeux OD, OG du porteur, et s'étend dans un plan moyen PM qui, vu de profil, forme avec un plan vertical PV (passant par exemple par le pontet nasal 13) un angle d'inclinaison verticale TETA autour d'une direction horizontale perpendiculaire à un plan sagittal PSAG de la tête TP du porteur. Cet angle TETA est communément appelé angle pantoscopique.

Le plan sagittal PSAG, aussi appelé plan médian de la tête TP du porteur, est parallèle au plan de la figure 1 et schématisé sur la figure 2.

Il s'agit ici de déterminer de façon précise à partir d'une image frontale du porteur les paramètres géométrico-physionomiques de la tête TP du porteur et de la monture 10, comme par exemple l'angle pantoscopique TETA ou la hauteur H des pupilles des yeux du porteur par rapport au bord inférieur de la monture 10, en vue de réaliser la conception personnalisée et/ou l'adaptation de la paire de lentilles correctrices à la physionomie de la tête du porteur et à la géométrie de la monture 10, en conformité avec la fonction optique de correction voulue.

Pour cela, une pupille 7 de l'appareil de capture d'image 1 est placée grâce au procédé selon l'invention à la même altitude que les yeux du porteur au moment de la capture d'image.

Dans la posture orthostatique dite naturelle du porteur, illustrée par la figure 1, celui-ci est dans une configuration assise ou debout qui est telle que sa tête TP est droite, c'est-à-dire que le plan de Francfort PF relatif à la tête du porteur est sensiblement horizontal. Comme représenté sur la figure 1, le plan de Francfort PF est défini comme le plan passant par les points orbitaires inférieurs OR et le porion PO du porteur, le porion étant le point le plus élevé du conduit auditif, qui correspond au tragion de l'oreille. L'axe de regard ou droite de visée du porteur DV est alors l'axe de regard primaire DVI, horizontal, correspondant au cas où le porteur regarde l'horizon droit devant lui à l'infini.

Sur la figure 2, on a représenté un appareil de capture d'image 1 utilisé pour réaliser le procédé de mesure de paramètres géométrico-morphologiques individuels d'un porteur équipé d'une paire de lunettes de présentation.

Cet appareil de capture d'image 1 numérique est similaire à un appareil de photographie numérique de poche du commerce de grand public, comportant un boîtier 2, un bouton de déclenchement 3 et des moyens de visualisation de l'image à capturer comprenant un écran de visée 4.

On pourra en variante avantageusement utiliser comme appareil de capture d'image 1 une caméra vidéo ou un appareil de photographie à déclenchement rapide, apte à fournir une pluralité de prises de vue à partir desquelles on pourra calculer une moyenne ou appliquer un filtrage ou encore sélectionner la prise de vue la plus pertinente.

Quoi qu'il en soit, l'appareil de capture d'image 1 est manipulé par l'opticien pour capturer, dans un plan facial de capture d'image PCI perpendiculaire à l'axe optique de l'appareil de capture d'image, une image du visage du porteur équipé de la monture 10. Ce plan est qualifié de facial en ce sens qu'il est perpendiculaire au plan sagittal PSAG et au plan de Francfort PF de la tête TP du porteur.

L'appareil de capture d'image 1 possède d'autre part des moyens pour sa communication avec un ordinateur 18 équipé de moyens de communication correspondants. Les moyens de communication de l'appareil de capture d'image 1 et de l'ordinateur 18 sont du type filaires ou sans fil et, étant d'une conception courante quelconque, ne seront pas décrits. Avantageusement, ces moyens de communication s'intègrent à une architecture de réseau commune ou de liaison point à point permettant à l'appareil de capture d'image 1 de communiquer avec plusieurs ordinateurs.

Selon une première famille de modes de réalisation du procédé qui ne sont pas revendiqués, l'appareil de capture d'image 101;102;103;104;105 utilisé comporte un dispositif d'assistance visuelle comportant au moins un objet lumineux monté en pendule soit sur l'appareil de capture d'image 101;102;103;104;105 soit directement ou indirectement sur la tête TP du porteur.

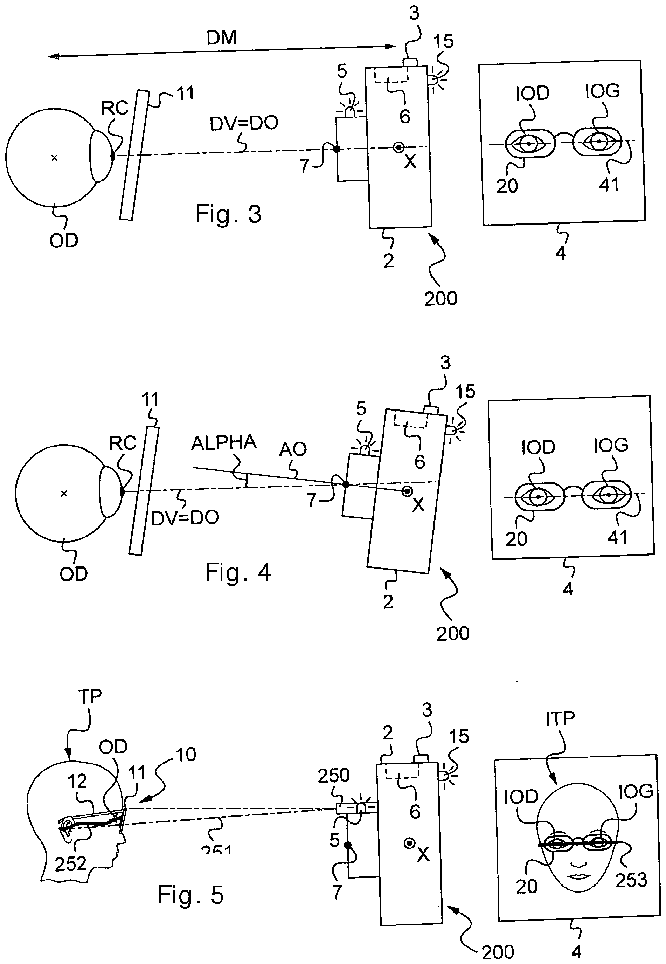

Selon un premier mode de réalisation de cette première famille représenté sur la figure 3, l'appareil de capture d'image 101 est similaire à l'appareil de capture d'image 1 représenté sur la figure 2 et utilisé dans le contexte décrit en référence à cette figure 2. Il comporte ainsi un boîtier 2, un bouton de déclenchement 3 et des moyens de visualisation de l'image à capturer comprenant un écran de visée 4. Il comporte de plus une source lumineuse 5, telle qu'une diode, apte à attirer le regard du porteur. Cette diode 5 est adjacente à la pupille 7 de l'appareil de capture d'image 101, et elle représente le point de visée de l'appareil de capture d'image 101. Elle est placée de telle sorte que la droite de visée DV reliant ce point de visée et les yeux du porteur dans les conditions de capture d'image forme avec sa projection sur un plan horizontal un angle inférieur ou égal à 6 degrés.

Par exemple, si la distance de capture d'image DM entre le porteur et l'appareil de capture d'image 101 est d'environ 1 mètre, la diode 5 matérialisant le point de visée est placée à une hauteur inférieure à 10 centimètres de la pupille 7 de l'appareil de capture d'image 101. En pratique, compte tenu du diamètre habituel de la pupille 7 de l'appareil de capture d'image 101, le point de visée est situé à environ 30 millimètres de cette pupille 7. Si le porteur fixe du regard la diode 5, on peut alors considérer, par une approximation au premier ordre, que la droite de visée DV du porteur est confondue avec la droite d'observation DO de l'appareil de capture d'image 101.

Un point remarquable RC du visage du porteur est ici représenté par une pupille RC d'un oeil OD, OG de ce porteur.

L'appareil de capture d'image 101 est ici équipé d'une source lumineuse active 50 matérialisée par un pointeur lumineux 50A émettant un faisceau de lumière 51 directionnel d'angle d'ouverture faible selon la direction verticale, de telle sorte que l'épaisseur du faisceau dans la direction verticale soit par exemple de l'ordre de 1 à 10 millimètres à la distance de capture d'image DM habituelle qui est d'environ un mètre. La projection du faisceau lumineux émis par ce pointeur sur un plan vertical est donc matérialisée par une ligne droite.

Ce pointeur lumineux 50A est monté en pendule libre sur l'appareil de capture d'image 101 : il est monté sur le boîtier 2 de l'appareil de capture d'image 101 pour pivoter librement autour d'un axe de pivotement horizontal sensiblement perpendiculaire à l'axe optique de l'appareil de capture d'image. Par exemple, le pointeur lumineux 50A est attaché à l'extrémité inférieure d'un ruban ou d'une tige pivotante 50B dont l'extrémité supérieure est liée à un promontoire 50C s'étendant en porte-à-faux à partir de la façade 8 avant de l'appareil de capture d'image 101 dont elle est solidaire. La direction du faisceau lumineux 51 reste donc connue et constante par rapport au plan horizontal, quelle que soit l'inclinaison de l'appareil de capture d'image 101. De préférence, un moyen d'amortissement est prévu entre le pointeur lumineux 50A et l'appareil de capture d'image 101 de manière à éviter des oscillations intempestives de ce pointeur.

Le pointeur lumineux 50A est monté à une distance H1 de la pupille 7 de l'appareil de capture d'image 101 de préférence inférieure à 20 centimètres, ou telle que l'angle A1 entre le faisceau émis par le pointeur 50 et sa projection sur un plan horizontal soit compris entre +11 et -11 degrés. L'inclinaison du pointeur lumineux 50A par rapport à l'horizontale est alors ajustée de sorte que, à la distance de capture d'image DM d'environ 1 mètre, l'altitude du faisceau lumineux 51 coïncide avec l'altitude de la pupille 7 de l'appareil de capture d'image 101, et que la projection de ce faisceau sur un plan vertical soit horizontale. L'inclinaison du pointeur lumineux 50A dans sa position d'équilibre, représentée par l'angle A1 sur la figure 3, permet alors de compenser la distance H1 entre la pupille 7 de l'appareil de capture d'image 101 et le pointeur 50A.

En variante, on peut envisager que le pointeur lumineux 50A soit monté très proche de la pupille 7 de l'appareil de capture d'image 101, et de préférence de façon à ce que le faisceau lumineux 51 émis s'étende selon un plan moyen horizontal. Il est positionné par exemple sensiblement à la même altitude que la pupille 7 de l'appareil de capture d'image 101. Un plan horizontal proche de celui contenant la pupille 7 de l'appareil de capture d'image 101 est alors avantageusement matérialisé par le faisceau lumineux 51.

En variante, l'utilisation d'un pointeur lumineux dont le faisceau présente une section de dimension réduite selon les directions verticale et horizontale peut être envisagée.

En pratique, la mesure se déroule de la façon suivante.

L'opérateur positionne la paire de lunettes de présentation 10 sur le visage du porteur. Le porteur est assis ou debout, avec sa tête droite.

L'opérateur se saisit de l'appareil de capture d'image 101 et cadre le visage du porteur. L'opérateur active la diode lumineuse 5 en enfonçant d'un premier niveau le bouton de déclenchement 3 et demande au porteur de fixer le point de visée matérialisé par cette diode 5. Il active alors le pointeur lumineux 50, qui se projette sur la tête du porteur TP selon une ligne lumineuse 52.

L'opérateur positionne l'appareil de capture d'image dans une première configuration en ajustant l'altitude de l'appareil de capture d'image 101 de telle sorte que la position verticale de l'image 53 de cette ligne lumineuse sur l'image ITP de la tête du porteur visualisée sur l'écran de visée 4 soit identique à la position verticale des images IOD, IOG des yeux du porteur visualisées sur l'écran de visée 4.

Alternativement, l'opérateur ajuste l'altitude de l'appareil de capture d'image 101 de telle sorte que l'écart entre la position verticale de l'image 53 de cette ligne lumineuse visualisée sur l'écran de visée 4 et la position verticale des images des yeux IOD, IOG du porteur visualisées sur l'écran de visée 4 ait une valeur prédéterminée.

En variante, l'opérateur ajuste l'altitude de l'appareil de capture d'image 101 de telle sorte que la ligne lumineuse 52 soit superposée aux yeux du porteur sur le visage de celui-ci, ou que l'écart entre la ligne lumineuse 52 et les yeux du porteur ait une valeur prédéterminée.

Selon une autre variante, le pointeur lumineux 50A est remplacé par un pointeur infrarouge. Le faisceau infrarouge se projette sur le visage du porteur selon une ligne visible en rouge sur l'écran de visée 4 de l'appareil de capture d'image 101, car les capteurs d'image des appareils de capture d'image numériques sont sensibles dans le domaine des longueurs d'onde infrarouge proches des longueurs d'onde visibles (entre 0,7 et 1,5 micromètres de longueur d'onde). Le porteur, lui, ne voit pas le faisceau infrarouge et n'est donc pas ébloui par la lumière comme dans le cas de l'utilisation d'un faisceau lumineux visible.

L'opérateur ajuste alors l'altitude de l'appareil de capture d'image 101 de telle sorte que la position verticale de l'image de la projection du faisceau infrarouge visible en rouge sur l'écran de visée 4 soit identique à la position verticale des images des yeux IOD, IOG du porteur visualisées sur l'écran de visée 4.

Selon une autre variante, le faisceau lumineux visible ou infrarouge peut être éteint après ajustement de l'altitude de l'appareil de capture d'image 101, préalablement à la capture d'image pour éviter de gêner le porteur.

Puis l'opérateur déclenche une capture d'image au moyen du bouton de déclenchement 3. Lors de cette capture d'image, l'appareil de capture d'image 101 est maintenu par l'opérateur dans une seconde configuration qui est la même que la première configuration précitée. Toutefois, pour davantage de souplesse d'utilisation ou en vue d'une prise de vue spécifique, on peut prévoir, alternativement, que l'opérateur place, lors de la capture d'image, l'appareil de capture d'image 101 dans une deuxième configuration distincte de la première configuration, en modifiant l'inclinaison de l'appareil de capture d'image 101 mais sans modifier son altitude.

Typiquement, la pupille de l'appareil de capture d'image peut alors être décalée horizontalement et/ou l'axe optique de l'appareil de capture d'image peut ne pas être horizontal, mais légèrement oblique, pour autant que les images IOD, IOG des yeux et l'image 20 des lunettes du porteur restent visibles sur l'écran de visée 4 de l'appareil de capture d'image 101.

Quoi qu'il en soit, l'image est ainsi capturée dans une configuration où la pupille 7 de l'appareil de capture d'image 101 et les yeux OD, OG du porteur sont dans un plan sensiblement horizontal, et donc à la même altitude. On considère ici, et dans l'ensemble des modes de réalisation décrits, que la pupille 7 de l'appareil de capture d'image 101 et les yeux OD, OG du porteur sont sensiblement à la même altitude si la droite d'observation DO reliant la pupille 7 et un oeil OD du porteur forme avec sa projection dans un plan horizontal un angle compris entre +5 et -5 degrés, ce qui élimine toute erreur de parallaxe verticale, en particulier sur le positionnement vertical des yeux par rapport à la monture 10. On comprend en effet qu'en raison de la distance non nulle existant entre le plan moyen de la monture 10 et les yeux du porteur, une inclinaison trop importante de la droite d'observation DO engendrerait une erreur de parallaxe verticale sur l'image capturée.

De plus, la droite de visée DV étant ici confondue avec la droite d'observation DO, la droite de visée DV du porteur est également horizontale, ce qui assure que le porteur est dans une position orthostatique naturelle.

L'appareil de capture d'image 101 transmet ensuite l'image ainsi capturée à l'ordinateur 18 qui l'enregistre en mémoire vive ou de masse, en vue de son traitement par le logiciel de traitement et de calcul installé sur l'ordinateur 18. Un tel traitement est connu et ne sera pas détaillé ici.

Grâce au logiciel de traitement de l'image capturée, l'ordinateur 18 calcule à partir de l'image capturée isolément ou en combinaison avec d'autres images capturées dans d'autres configurations au moins un des paramètres géométrico-physionomiques recherchés. Ce paramètre est par exemple la hauteur H des pupilles RC du porteur par rapport à la monture 10, l'écart pupillaire du porteur, ou l'angle pantoscopique TETA de la monture 10.

Selon un deuxième mode de réalisation de la première famille, représenté sur la figure 4, l'appareil de capture d'image 102 est similaire à l'appareil de capture d'image 1 représenté sur la figure 2 et utilisé dans le contexte décrit en référence à cette figure 2. Il comporte ainsi un boîtier 2, un bouton de déclenchement 3 et des moyens de visualisation de l'image à capturer comprenant un écran de visée 4. Il comporte de plus une source lumineuse 9, telle qu'une diode, apte à attirer le regard du porteur. Cette diode 9 est adjacente à une pupille 7 de l'appareil de capture d'image 102, et elle représente le point de visée de l'appareil de capture d'image 102. Elle est placée, comme la diode 5 dans le premier mode de réalisation, de telle sorte que la droite de visée DV reliant ce point de visée et les yeux du porteur dans les conditions de capture d'image forme avec sa projection sur un plan horizontal un angle inférieur ou égal à 6 degrés. La distance H2' entre la diode 9 et la pupille 7 de l'appareil de capture d'image 102 est ainsi de préférence inférieure à 10 centimètres.

Si le porteur fixe du regard la diode 9, on peut alors considérer, par une approximation au premier ordre, que la droite de visée DV du porteur est confondue avec la droite d'observation DO de l'appareil de capture d'image 102.

Le point remarquable RC du visage du porteur est ici représenté par une pupille RC d'un oeil OD de ce porteur.

La monture 10 choisie par le porteur est ici équipée d'un petit miroir pendulaire 60. Ce miroir pendulaire 60 comporte un miroir 60A dont la taille est de l'ordre de 3 centimètres en hauteur et 5 centimètres en longueur, attaché par exemple à un ruban ou à une tige pivotante 60B, lié à un promontoire 60C s'étendant en porte-à-faux au-dessus de la monture 10. Ce miroir pendulaire 60 est fixé de manière amovible à un cercle 11 de la monture 10, par exemple par clipsage, ou par l'intermédiaire d'un diadème, ou de tout autre moyen connu de l'homme du métier.

Alternativement, le miroir pendulaire 60 peut également être monté directement sur la tête du porteur.

Les caractéristiques de ce miroir pendulaire 60 (la longueur du ruban ou de la tige pivotante 60B est d'environ 5 millimètres, la hauteur du promontoire 60C est d'environ 1 centimètre) sont telles que lorsque la monture 10 avec le miroir pendulaire 60 est positionnée sur le visage du porteur, le miroir 60A se trouve à une altitude proche de l'oeil OD du porteur, mais pas exactement à la même altitude, de façon à ne pas se trouver devant l'oeil OD du porteur. La distance H2 entre l'oeil du porteur et le centre du miroir est ainsi de préférence inférieure à 10 centimètres.

L'opérateur positionne la monture 10 équipée du miroir pendulaire 60 sur le visage du porteur. Le porteur est assis ou debout, avec sa tête droite.

L'opérateur se saisit de l'appareil de capture d'image 102 et cadre le visage du porteur. L'opérateur active la diode lumineuse 9 en enfonçant d'un premier niveau le bouton de déclenchement 3 et demande au porteur de fixer le point de visée matérialisé par cette diode 9.

L'opérateur positionne l'appareil de capture d'image 102 dans une première configuration en ajustant l'altitude de l'appareil de capture d'image 102 de telle sorte que le reflet 63 de la diode 9 sur le miroir pendulaire 60 soit visible sur l'image 62 du miroir 60A visualisée sur l'écran de visée 4 de l'appareil de capture d'image 102. En variante, notamment si on choisit un miroir de grande hauteur, il est avantageux de veiller à ce que le reflet lumineux soit ajusté en hauteur sur une mire prévue sur l'écran de visée 4 pour améliorer la précision du réglage.

Puis l'opérateur déclenche la capture d'une image grâce au bouton de déclenchement 3.

Alternativement, l'opérateur place l'appareil de capture d'image 102 dans une deuxième configuration en modifiant l'inclinaison de l'appareil de capture d'image 102 sans modifier son altitude, puis il déclenche une capture d'image au moyen du bouton de déclenchement 3.

Le reflet 63 de la diode 9 n'est visible sur l'image que lorsque la pupille 7 de l'appareil de capture d'image 102 est sensiblement à la même altitude que le miroir pendulaire, et donc sensiblement à la même altitude que les yeux OD, OG du porteur.

L'image est ainsi capturée dans une configuration où la droite d'observation DO forme avec sa projection dans un plan horizontal un angle compris entre +5 et -5 degrés , et où l'appareil de capture d'image 102 est donc sensiblement à la même altitude que les yeux du porteur OD, OG, ce qui élimine toute erreur de parallaxe verticale.

De plus, la droite de visée DV étant ici confondue avec la droite d'observation DO, la droite de visée DV du porteur est également horizontale, ce qui assure que le porteur est dans une position orthostatique naturelle.

Comme dans le premier mode de réalisation, l'appareil de capture d'image 102 transmet ensuite l'image capturée à l'ordinateur 18 qui calcule au moins un des paramètres géométrico-physionomiques recherchés.

Selon un troisième mode de réalisation de la première famille, représenté sur la figure 5, l'appareil de capture d'image 103 est similaire à l'appareil de capture d'image 1 représenté sur la figure 2 et utilisé dans le contexte décrit en référence à cette figure 2. Il comporte ainsi un boîtier 2, un bouton de déclenchement 3 et des moyens de visualisation de l'image à capturer comprenant un écran de visée 4. Il comporte de plus une source lumineuse 5, telle qu'une diode, apte à attirer le regard du porteur, dont les caractéristiques sont similaires à celles de la diode 5 décrite dans le premier mode de réalisation.

La monture 10 choisie par le porteur est équipée d'un pointeur lumineux pendulaire 70. Ce pointeur lumineux pendulaire 70 comporte un pointeur lumineux 70A, attaché par exemple à un ruban ou à une tige pivotante 70B, lié à un promontoire 70C s'étendant en porte-à-faux au-dessus de la monture 10. Ce pointeur lumineux pendulaire 70 est fixé de manière amovible sur la monture 10, par exemple par clipsage, ou par l'intermédiaire d'un diadème, ou de tout autre moyen connu de l'homme du métier.

Alternativement, le pointeur lumineux pendulaire 70 peut également être monté directement sur la tête du porteur.

Ce pointeur lumineux 70A émet un faisceau de lumière 71 directionnel d'angle d'ouverture faible selon la direction verticale, de telle sorte que la largeur du faisceau dans la direction verticale soit par exemple de l'ordre de 1 à 10 millimètres à la distance de capture d'image DM habituelle qui est d'environ un mètre.

En variante, l'utilisation d'un pointeur lumineux dont le faisceau présente une section de dimension réduite selon les directions verticale et horizontale peut être envisagée.

La longueur du ruban ou de la tige pivotante 70B est telle que lorsque la monture 10 avec le pointeur lumineux pendulaire 70 est positionnée sur le visage du porteur, le pointeur lumineux 70A se trouve à une altitude proche de l'oeil OD du porteur, mais pas exactement à la même altitude, de façon à ne pas se trouver devant l'oeil du porteur. La distance H3 entre le pointeur lumineux 70A et l'oeil OD du porteur est de préférence inférieure à 10 centimètres, et l'angle A3 entre le faisceau lumineux 71 émis par le pointeur lumineux 70A et sa projection sur un plan horizontal est de préférence compris entre +6 et -6 degrés. L'inclinaison du pointeur lumineux 70A par rapport à l'horizontale dans sa position d'équilibre, représentée par l'angle A3 sur la figure 5, permet alors de compenser la distance H3 entre le pointeur lumineux 70A et l'oeil OD du porteur, de sorte que, à la distance usuelle de capture d'image DM, le faisceau lumineux 71 se trouve à la même altitude que la pupille 7 de l'appareil de capture d'image 103.

L'opérateur positionne la monture 10 équipée du pointeur lumineux pendulaire 70 sur le visage du porteur. Le porteur est assis ou debout, avec sa tête droite.

L'opérateur se saisit de l'appareil de capture d'image 103 et cadre le visage du porteur. L'opérateur active la diode lumineuse 5 en enfonçant d'un premier niveau le bouton de déclenchement 3 et demande au porteur de fixer le point de visée matérialisé par cette diode 5.

L'opérateur positionne l'appareil de capture d'image 103 en ajustant l'altitude de celui-ci de telle sorte que l'image 72 du pointeur lumineux pendulaire 70 soit visible sur l'écran de visée 4 de l'appareil de capture d'image 103.

Puis il déclenche la capture d'une image grâce au bouton de déclenchement 3.

Alternativement, l'opérateur place l'appareil de capture d'image 103 dans une deuxième configuration en modifiant l'inclinaison de l'appareil de capture d'image 103 sans modifier son altitude, puis il déclenche une capture d'image au moyen du bouton de déclenchement 3.

L'image 72 du pointeur lumineux 70A n'est visible sur l'image que lorsque la pupille 7 de l'appareil de capture d'image 103 est sensiblement à la même altitude que les yeux OD, OG du porteur, car le faisceau 71 est de dimension réduite selon la direction verticale. Le fait que l'image 72 du pointeur lumineux 70 soit visible sur l'écran de visée 4 assure donc que la pupille 7 de l'appareil de capture d'image 103 est sensiblement à la même altitude que les yeux OD, OG du porteur.

L'image est ainsi capturée dans une configuration où la droite d'observation DO forme avec sa projection dans un plan horizontal un angle compris entre +5 et -5 degrés, ce qui élimine toute erreur de parallaxe verticale.

De plus, la droite de visée DV étant ici confondue avec la droite d'observation DO, la droite de visée DV du porteur est également horizontale, ce qui assure que le porteur est dans une position orthostatique naturelle.

Comme dans le premier mode de réalisation, l'appareil de capture d'image 103 transmet ensuite l'image ainsi capturée à l'ordinateur 18 qui calcule au moins un des paramètres géométrico-physionomiques recherchés.

Selon un quatrième mode de réalisation de ladite première famille, représenté sur la figure 6, l'appareil de capture d'image 104 est similaire à l'appareil de capture d'image 1 représenté sur la figure 2 et utilisé dans le contexte décrit en référence à cette figure 2. Il comporte ainsi un boîtier 2, un bouton de déclenchement 3 et des moyens de visualisation de l'image à capturer comprenant un écran de visée 4. Il est de plus équipé d'un miroir sans tain pendulaire 80 placé devant la pupille 7 de l'appareil de capture d'image 104, et dans lequel le porteur se regarde.

Alternativement, l'appareil de capture d'image 104 peut être équipé d'un miroir pendulaire placé à proximité de sa pupille 7.

Le miroir sans tain 80A est un miroir ayant par exemple un coefficient de réflexion de 50%. Il est de taille réduite, typiquement 2 à 5 centimètres, et relié par un ruban ou une tige pivotante 80B par exemple, à un promontoire 80C s'étendant en porte-à-faux à partir de la façade 8 avant de l'appareil de capture d'image 104.

L'opérateur demande au porteur de fixer le miroir sans tain 80A, et de lui indiquer lorsqu'il voit le reflet de ses yeux dans ce miroir sans tain 80A.

L'opérateur positionne l'appareil de capture d'image 104 dans une première configuration en modifiant l'altitude de celui-ci jusqu'à ce que le porteur lui indique qu'il voit le reflet de ses propres yeux dans le miroir 80A. L'opérateur déclenche alors la capture d'image grâce au bouton de déclenchement 3. Le miroir 80A étant sans tain, l'opérateur peut visualiser avant la capture de l'image les images IOD, IOG des yeux OD, OG du porteur, et l'image 20 de la monture 10 de lunettes sur l'écran de visée 4.

Lorsque le porteur voit le reflet de ses yeux dans le miroir 80A, l'altitude dudit miroir, et donc de la pupille 7 de l'appareil de capture d'image 104 est identique à celle des yeux du porteur, indépendamment de l'inclinaison dudit appareil de capture d'image 104.

L'opérateur déclenche alors la capture de l'image grâce au bouton de déclenchement 3.

Alternativement, l'opérateur place l'appareil de capture d'image 104 dans une deuxième configuration en modifiant l'inclinaison de l'appareil de capture d'image 104 sans modifier son altitude, puis il déclenche une capture d'image au moyen du bouton de déclenchement 3.

De plus, la droite de visée DV du porteur est ainsi horizontale, ce qui assure que le porteur est dans une position orthostatique naturelle.

Comme dans le premier mode de réalisation, l'appareil de capture d'image 104 transmet ensuite l'image ainsi capturée à l'ordinateur 18 qui calcule au moins un des paramètres géométrico-physionomiques recherchés.

Selon un cinquième mode de réalisation de ladite première famille, représenté sur la figure 7, l'appareil de capture d'image 105 est similaire à l'appareil de capture d'image 1 représenté sur la figure 2 et utilisé dans le contexte décrit en référence à cette figure 2. Il comporte ainsi un boîtier 2, un bouton de déclenchement 3 et des moyens de visualisation de l'image à capturer comprenant un écran de visée 4. Il comporte de plus une source lumineuse 5, telle qu'une diode, apte à attirer le regard du porteur, dont les caractéristiques sont similaires à celles de la diode 5 décrite dans le premier mode de réalisation.

La monture 10 choisie par le porteur est équipée d'un objet lumineux pendulaire 90. Cet objet lumineux pendulaire 90 comporte un objet lumineux 90A, attaché par exemple à un ruban ou à une tige pivotante 90B, lié à un promontoire 90C s'étendant en porte-à-faux au-dessus de la monture 10. Cet objet lumineux pendulaire 90 est fixé de manière amovible sur un cercle 11 de la monture 10, par exemple par clipsage, ou par l'intermédiaire d'un diadème, ou de tout autre moyen connu de l'homme du métier.

L'objet lumineux 90A est de préférence une licorne de forme prismatique formée par exemple de deux tétraèdres de dimensions identiques et reliés par leurs bases. L'un des tétraèdres pointe donc vers le haut, et l'autre vers le bas. Les faces des deux tétraèdres sont de couleurs différentes. Cet objet est un objet lumineux qui diffuse la lumière ambiante.

Cet objet 90A étant pendulaire, son orientation est connue et fixe. La base commune des deux tétraèdres est de préférence horizontale. Le ruban ou la tige pivotante 90B reliant l'objet 90A au promontoire 90C passe par un plan de symétrie verticale de l'objet.

Ainsi lorsque la pupille 7 de l'appareil de capture d'image 105 est à la même altitude que l'objet lumineux 90A, l'image 91 de l'objet lumineux 90A visualisée sur l'écran de visée 4 présente des surfaces de couleurs différentes de tailles similaires.

En variante, on peut utiliser par exemple une licorne cylindrique. Dans ce cas, lorsque la pupille 7 de l'appareil de capture d'image 105 est à la même altitude que la licorne, celle-ci apparaît sous forme d'un cercle sur l'image visualisée sur l'écran de visée 4. Lorsque la pupille 7 de l'appareil de capture d'image 105 n'est pas à la même altitude que la licorne, celle-ci apparaît sous forme d'un segment d'autant plus long que l'écart d'altitude entre la pupille 7 et la licorne est important.

La longueur du ruban ou de la tige pivotante 90B est telle que lorsque la monture 10 équipée de l'objet lumineux pendulaire 90 est positionnée sur le visage du porteur, l'objet lumineux 90A se trouve à une altitude proche de l'oeil OD, OG du porteur, mais pas exactement à la même altitude, de façon à ne pas se trouver devant l'oeil du porteur. La distance H5 entre le centre de l'objet lumineux 90A et l'oeil du porteur OD est de préférence inférieure à 10 centimètres.

En variante, on peut prévoir que l'inclinaison de l'objet lumineux pendulaire 90 par rapport à l'horizontale compense la distance H5 pour améliorer la précision du réglage d'altitude de l'appareil de capture d'image 105.

L'opérateur positionne la monture 10 équipée de l'objet lumineux pendulaire 90 sur le visage du porteur. Le porteur est assis ou debout, avec sa tête droite.

L'opérateur se saisit de l'appareil de capture d'image 105 et cadre le visage du porteur. L'opérateur active la diode lumineuse 5 en enfonçant d'un premier niveau le bouton de déclenchement 3 et demande au porteur de fixer le point de visée matérialisé par cette diode 5.

L'opérateur positionne l'appareil de capture d'image 105 dans une première configuration en ajustant l'altitude de celui-ci de telle sorte que l'image 91 de l'objet lumineux 90A visualisée sur l'écran de visée 4 présente des surfaces de couleurs différentes de tailles similaires.

Puis il déclenche la capture d'une image grâce au bouton de déclenchement 3.

Alternativement, l'opérateur place l'appareil de capture d'image 105 dans une deuxième configuration en modifiant l'inclinaison de l'appareil de capture d'image 105 sans modifier son altitude, puis il déclenche une capture d'image au moyen du bouton de déclenchement 3.

L'image est ainsi capturée dans une configuration où la droite d'observation DO forme avec sa projection dans un plan horizontal un angle compris entre 5 et -5 degrés, et où l'appareil de capture d'image 105 est donc sensiblement à la même altitude que les yeux du porteur OD, OG, ce qui élimine toute erreur de parallaxe verticale.

De plus, la droite de visée DV étant ici confondue avec la droite d'observation DO, la droite de visée DV du porteur est également horizontale, ce qui assure que le porteur est dans une position orthostatique naturelle.

Comme dans le premier mode de réalisation, l'appareil de capture d'image 105 transmet ensuite l'image ainsi capturée à l'ordinateur 18 qui calcule au moins un des paramètres géométrico-physionomiques recherchés.

Selon une deuxième famille de modes de réalisation du procédé selon l'invention qui sont revendiqués, le positionnement manuel de l'appareil de capture d'image 200 comporte la délivrance à l'opérateur d'une information de compensation d'un angle d'assiette ALPHA représenté sur la figure 9 formé entre l'axe optique AO de l'appareil de capture d'image 200 et sa projection dans le plan horizontal PF.

Selon un premier mode de réalisation de cette deuxième famille, représenté sur les figures 8 et 9, l'appareil de capture d'image 200 est un appareil de capture d'image similaire à l'appareil de capture d'image 1 représenté sur la figure 2 et utilisé dans le contexte décrit en référence à cette figure 2. Il comporte ainsi un boîtier 2, un bouton de déclenchement 3 et des moyens de visualisation de l'image à capturer comprenant un écran de visée 4. Il comporte de plus une source lumineuse 5, telle qu'une diode, apte à attirer le regard du porteur .

Cette diode 5 est adjacente à la pupille 7 de l'appareil de capture d'image 101, et elle représente le point de visée de l'appareil de capture d'image 200. Elle est placée de telle sorte que la droite de visée DV reliant ce point de visée et les yeux du porteur dans les conditions de capture d'image forme avec sa projection sur un plan horizontal un angle inférieur ou égal à 6 degrés.

Par exemple, si la distance de capture d'image DM entre le porteur et l'appareil de capture d'image 200 est d'environ 1 mètre, la diode 5 matérialisant le point de visée est placée à une hauteur inférieure à 10 centimètres de la pupille 7 de l'appareil de capture d'image 200. En pratique, compte tenu du diamètre habituel de la pupille 7 de l'appareil de capture d'image 200, le point de visée est situé à environ 30 millimètres de cette pupille 7. Si le porteur fixe du regard la diode 5, on peut alors considérer, par une approximation au premier ordre, que la droite de visée DV du porteur est confondue avec la droite d'observation DO de l'appareil de capture d'image 200.

L'appareil de capture d'image 200 comporte de plus des moyens de mesure d'inclinaison embarqué 6 permettant de mesurer un angle d'assiette ALPHA que forme l'axe optique AO de l'objectif de l'appareil de capture d'image 200 avec sa projection sur le plan horizontal PF. Cet angle représente l'inclinaison de l'appareil de capture d'image 200 autour d'un axe X parallèle au sol et perpendiculaire à l'axe optique AO de l'appareil, représenté sur les figures 8 et 9.

Le point remarquable RC du visage du porteur est également représenté par une pupille d'un oeil de ce porteur.

L'appareil de capture d'image 200 est ici équipé d'un inclinomètre 6 électronique embarqué adapté à fournir à l'opérateur un signal représentatif de la valeur prise par l'angle d'assiette ALPHA à tout moment. On pourra par exemple utiliser un inclinomètre à encombrement réduit du genre capteur capacitif (comprenant un accéléromètre ou gravimètre), capteur magnétique apte à mesurer le champ magnétique terrestre, ou un champ artificiel. On pourra aussi utiliser un système de capture de position tel que commercialisé par la société Polhemus, ou encore un gyroscope tel que celui commercialisé sous la référence ADXRS 614 par la société Analog Device, etc.

En variante, on peut envisager d'utiliser de la même manière un niveau à bulle en remplacement de l'inclinomètre électronique.

L'écran de visée 4 de l'appareil de capture d'image 200 comprend également une mire formée d'un réticule 41 horizontal fixe placé à une position verticale prédéfinie sur l'écran de visée 4, visible sur les figures 8 et 9.

Avant toute mesure, une étape d'étalonnage de l'inclinomètre 6 doit être réalisée. Cette étape d'étalonnage est faite avant la première mesure, et il n'est pas nécessaire de la renouveler avant chaque mesure. Pour cela, on place devant l'appareil de capture d'image 200 une ligne parallèle à l'axe X, située à la distance de capture d'image DM habituelle qui est d'environ 1 mètre, et à la même altitude que le point de visée matérialisé par la diode 5. On positionne l'appareil de capture d'image 200 de tel sorte que le réticule 41 coïncide avec cette ligne visualisée sur l'écran de visée 4, et on enregistre cette position comme zéro de l'inclinomètre 6.

Cet étalonnage peut alternativement être réalisé devant un miroir en faisant coïncider la position verticale du réticule 41 et de l'image du point de visée sur l'écran de visée 4.

Selon la position verticale choisie pour le réticule 41, l'angle d'assiette ALPHA est nul au zéro de l'inclinomètre 6, comme représenté sur la figure 8, ou est non nul au zéro de l'inclinomètre 6, comme représenté sur la figure 9. Dans les deux cas, la droite d'observation DO reliant la pupille 7 de l'appareil de capture d'image 200 et la pupille RC de l'oeil OD du porteur est horizontale, et le procédé de prise de mesure se déroule de la façon décrite ci-dessous.

L'opticien positionne la paire de lunettes de présentation 10 sur le visage du porteur. Le porteur est assis ou debout, avec sa tête droite.

L'opticien ou opérateur se saisit de l'appareil de capture d'image 200 et cadre le visage du porteur. L'opérateur active la diode lumineuse 5 en enfonçant d'un premier niveau le bouton de déclenchement 3 et demande au porteur de fixer le point de visée matérialisé par cette diode 5.

Dans une première étape a) de réglage d'altitude, il place l'appareil de capture d'image 200 de telle sorte que la position verticale du réticule 41 présent sur l'écran de visée 4 coïncide avec les images des yeux IOD, IOG du porteur visualisées sur cet écran de visée 4.

Dans une deuxième étape b) de réglage d'inclinaison, il contrôle l'orientation de l'appareil de capture d'image 200 en activant la mesure de l'angle d'assiette ALPHA en temps réel par l'inclinomètre 6 embarqué. Il ajuste la position de l'appareil de capture d'image 200 afin que l'angle indiqué par l'inclinomètre 6 soit nul.

Un signal lumineux et/ou sonore émis par l'inclinomètre 6 est prévu pour indiquer en temps réel à l'opérateur l'inclinaison relative de l'appareil de capture d'image 200 par rapport à cet angle nul. Par exemple, une diode de réglage 15 placée à un endroit du boîtier toujours visible de l'opérateur, comme l'écran de visée 4, est de couleur bleu clignotante lorsque l'angle d'inclinaison est positif et que l'appareil de capture d'image 200 pointe vers le haut, tandis qu'elle est rouge clignotante lorsqu'il pointe vers le bas. Enfin, la diode de réglage 15 est verte et non clignotante lorsque l'angle d'assiette ALPHA est nul. Cette diode de réglage 15 indique donc à l'opérateur comment modifier l'orientation de l'appareil de capture d'image 200 pour atteindre un angle d'assiette ALPHA nul : il faut tourner l'appareil vers le bas si la diode de réglage 15 est bleue et le tourner vers le haut si la diode de réglage 15 est rouge. De plus, la fréquence des clignotements de la diode de réglage 15 est inversement proportionnelle à la valeur absolue de l'angle d'assiette ALPHA, ce qui indique à l'opérateur si l'orientation de l'appareil est plus ou moins éloignée de l'angle d'assiette ALPHA nul.

Une fois l'angle d'assiette ALPHA réglé, si la position verticale des images des yeux IOD, IOG sur l'écran de visée 4 coïncide toujours avec celle du réticule 41, l'opérateur déclenche une capture d'image au moyen du bouton de déclenchement 3.

Alternativement, l'opérateur modifie alors l'angle d'assiette ALPHA de façon à conserver identique l'altitude de l'appareil de capture d'image 200 et à cadrer au moins les images des yeux du porteur IOD, IOG et l'image de la monture 20 sur l'image prête à être capturée, puis déclenche une capture d'image au moyen du bouton de déclenchement 3.

L'image est ainsi capturée dans une configuration où la droite d'observation DO forme avec sa projection dans un plan horizontal un angle compris entre 5 et -5 degrés, et où l'appareil de capture d'image 200 est donc à la même altitude que les yeux du porteur OD, OG, ce qui élimine toute erreur de parallaxe verticale, en particulier sur le positionnement vertical des yeux par rapport à la monture. On comprend en effet qu'en raison de la distance non nulle existant entre le plan moyen de la monture 10 et les yeux du porteur, une inclinaison trop importante de la droite d'observation DO engendrerait une erreur de parallaxe verticale sur l'image capturée.

De plus, la droite de visée DV étant ici confondue avec la droite d'observation DO, la droite de visée DV du porteur est également horizontale, ce qui assure que le porteur est dans une position orthostatique naturelle.

Si la position verticale des images des yeux IOD, IOG sur l'écran de visée 4 ne coïncide plus avec celle du réticule 41, l'opérateur reprend à l'étape a).

Dans une étape c), l'appareil de capture d'image 200 transmet l'image ainsi capturée et l'angle d'assiette ALPHA au moment de la capture d'image mesuré par l'inclinomètre 6 embarqué à l'ordinateur 18 qui l'enregistre en mémoire vive ou de masse, en vue de son traitement par le logiciel de traitement et de calcul installé sur l'ordinateur 18. Un tel traitement est connu et ne sera pas détaillé ici.

Grâce au logiciel de traitement de l'image capturée, l'ordinateur 18 calcule, dans une étape d), à partir de l'image capturée isolément ou en combinaison avec d'autres images capturées dans d'autres configurations, et éventuellement du ou des angles d'assiette ALPHA au moment des captures d'image, au moins un des paramètres géométrico-physionomiques recherchés. Ce paramètre est par exemple la hauteur des pupilles RC du porteur par rapport à la monture 10, l'écart pupillaire du porteur, ou l'angle pantoscopique TETA de la monture 10.

Selon une première variante appartenant à ladite deuxième famille de modes de réalisation, l'écran de visée de l'appareil de capture d'image ne comprend pas un réticule horizontal fixe placé à une position verticale prédéfinie sur l'écran. Il comprend un réticule horizontal dynamique incrusté numériquement dans l'image affichée par cet écran de visée 4. La position verticale de ce réticule sur l'écran de visée est calculée et mise à jour en temps réel par un dispositif électronique et/ou informatique embarqué dans l'appareil de capture d'image en fonction de la mesure de l'angle d'assiette ALPHA donnée par l'inclinomètre électronique.

Pour cela, une étape d'étalonnage de l'inclinomètre est préalablement réalisée avant toute mesure. On place devant l'appareil de capture d'image une ligne parallèle à l'axe X, située à la distance de capture d'image DM habituelle qui est d'environ 1 mètre, et à la même altitude que le point de visée matérialisé par la diode. On positionne l'appareil de capture d'image de tel sorte que le réticule dynamique coïncide avec cette ligne visualisée sur l'écran de visée, et on enregistre cette position comme zéro de l'inclinomètre. Puis on modifie l'angle d'assiette ALPHA de l'appareil de capture d'image afin d'étalonner le rapport appelé gain entre le déplacement du réticule et l'angle d'inclinaison mesuré par l'inclinomètre. Ce gain est une constante étalonnée en fonction notamment de la focale de l'appareil de capture d'image.

On peut prévoir qu'un message d'erreur apparaisse sur l'écran de visée si l'inclinaison et/ou l'altitude de l'appareil de capture d'image ne permettent pas l'affichage du réticule dynamique sur l'écran de visée.

Ici le réticule dynamique matérialise le plan horizontal passant par le point de visée, et l'opérateur n'a plus qu'à positionner l'appareil de capture d'image de manière à faire coïncider le réticule et les images des yeux du porteur sur l'écran de visée en cadrant les yeux et les lunettes du porteur sur l'image et à déclencher une capture d'image au moyen du bouton de déclenchement, quel que soit l'angle d'assiette ALPHA de l'appareil de capture d'image. L'opérateur réalise ainsi simultanément les deux étapes a) et b) du premier mode de réalisation. Les autres étapes c) et d) ne sont pas modifiées.

Selon une deuxième variante appartenant à la deuxième famille de modes de réalisation, représentée sur la figure 10, l'écran de visée 4 de l'appareil de capture d'image 200 ne comprend pas un réticule 41 horizontal fixe placé à une position verticale prédéfinie sur l'écran.

L'appareil de capture d'image 200 est équipé d'un pointeur lumineux 250 émettant un faisceau de lumière 251 directionnel d'angle d'ouverture faible selon la direction verticale, de telle sorte que l'épaisseur du faisceau dans la direction verticale soit par exemple de l'ordre de 1 à 10 millimètres à la distance de capture d'image DM habituelle qui est d'environ un mètre. L'orientation de ce pointeur lumineux 250 est connue, et de préférence est telle que le faisceau lumineux 251 émis s'étende selon un plan moyen parallèle à l'axe X et à l'axe optique AO de l'appareil de capture d'image 200. Ce pointeur lumineux 250 est solidaire de l'appareil de capture d'image 200. Il est positionné par exemple à la même altitude que la diode 5 matérialisant le point de visée. Un plan contenant la droite d'observation DO est alors avantageusement matérialisé par le faisceau lumineux 251.

En variante, l'utilisation d'un pointeur lumineux dont le faisceau présente une section de dimension réduite selon les directions verticale et horizontale peut être envisagée.

Avant toute mesure, une étape d'étalonnage de l'inclinomètre 6 doit être réalisée. Cette étape d'étalonnage est faite avant la première mesure, et il n'est pas nécessaire de la renouveler avant chaque mesure. Pour cela, on place devant l'appareil de capture d'image 200 une ligne parallèle à l'axe X, située à la distance de capture d'image habituelle qui est d'environ 1 mètre, et à la même altitude que le point de visée matérialisé par la diode 5. On positionne l'appareil de capture d'image 200 de tel sorte que la projection du faisceau lumineux 251 sur le support de la ligne coïncide avec cette ligne, et on enregistre cette position comme zéro de l'inclinomètre 6.

L'orientation de ce pointeur lumineux 250 étant ici telle que le faisceau lumineux 251 émis s'étend selon un plan moyen parallèle à l'axe X et à l'axe optique AO de l'appareil de capture d'image 200, l'angle d'assiette ALPHA est nul au zéro de l'inclinomètre 6 comme représenté sur la figure 10.

En variante, selon l'orientation du pointeur lumineux 250 par rapport à l'axe optique AO de l'appareil de capture d'image, l'angle d'assiette ALPHA est non nul au zéro de l'inclinomètre 6.

L'opérateur se saisit de l'appareil de capture d'image 200 et cadre le visage du porteur. L'opérateur active la diode 5 en enfonçant d'un premier niveau le bouton de déclenchement 3 et demande au porteur de fixer le point de visée matérialisé par cette diode 5. Il active alors le pointeur lumineux 250, qui se projette sur la tête du porteur TP selon une ligne lumineuse 252.

Dans la première étape a) de réglage d'altitude, il place l'appareil de capture d'image 200 de telle sorte que la position verticale de l'image 253 de cette ligne lumineuse 252 visualisée sur l'écran de visée 4 soit identique à la position verticale des images des yeux IOD, IOG du porteur visualisées sur l'écran de visée 4.

Dans la deuxième étape b), il contrôle l'orientation de l'appareil de capture d'image 200 en activant la mesure de l'angle d'assiette ALPHA en temps réel par l'inclinomètre 6 embarqué. Il ajuste la position de l'appareil de capture d'image 200 afin que l'angle indiqué par l'inclinomètre 6 soit nul.

De même que dans le premier mode de réalisation de ladite deuxième famille décrit, un signal lumineux et/ou sonore émis par l'inclinomètre 6 est prévu pour indiquer en temps réel à l'opérateur l'inclinaison relative de l'appareil de capture d'image 200 par rapport à cet angle nul.

Une fois l'angle d'assiette ALPHA réglé, si l'image 253 de la ligne lumineuse visualisée sur l'écran de visée 4 est toujours superposée aux images des yeux IOD, IOG du porteur visualisées sur l'écran de visée 4, l'opérateur déclenche une capture d'image au moyen du bouton de déclenchement 3.

Si la position verticale des images des yeux IOD, IOG du porteur sur l'écran de visée 4 ne coïncide plus avec la position verticale du réticule 41, l'opérateur reprend à l'étape a).

Selon une troisième variante appartenant à la deuxième famille de modes de réalisation, l'appareil de capture d'image ne comporte pas de source lumineuse, telle qu'une diode, apte à attirer le regard du porteur.

L'appareil de capture d'image est placé derrière un miroir sans tain dans lequel le porteur se regarde. L'opérateur demande au porteur de fixer le reflet de ses yeux dans le miroir sans tain. Ce miroir sans tain est un miroir ayant par exemple un coefficient de réflexion de 50%.

Avant toute mesure, une étape d'étalonnage de l'inclinomètre doit être réalisée. Pour cela, on place devant l'appareil de capture d'image devant le miroir sans tain en faisant coïncider la position verticale du réticule fixe et de l'image du reflet de la pupille de l'appareil de capture d'image sur l'écran de visée et on enregistre cette position comme zéro de l'inclinomètre.

Cet étalonnage peut alternativement être réalisé du côté du miroir sans tain où se place habituellement l'opérateur si cette face du miroir possède un coefficient de réflexion d'au moins 10%.

Dans la première étape a) de réglage, l'opérateur est positionné à une distance d'environ 1 mètre du porteur. Il place l'appareil de capture d'image face au porteur, de l'autre côté du miroir sans tain, de telle sorte que la position verticale du réticule présent sur l'écran de visée coïncide avec les images des yeux du porteur vus à travers le miroir sans tain et visualisées sur l'écran de visée.

Dans la deuxième étape b), il contrôle l'orientation de l'appareil de capture d'image en activant la mesure de l'angle d'assiette ALPHA en temps réel par l'inclinomètre embarqué. Il ajuste la position de l'appareil de capture d'image afin que l'angle indiqué par l'inclinomètre soit nul.

De même que dans le premier mode de réalisation de ladite deuxième famille de modes de réalisation, un signal lumineux et/ou sonore émis par l'inclinomètre est prévu pour indiquer en temps réel à l'opérateur l'inclinaison relative de l'appareil de capture d'image par rapport à cet angle nul.

Une fois l'angle d'assiette ALPHA réglé, si la position verticale du réticule présent sur l'écran de visée coïncide toujours avec les images des yeux du porteur vus à travers le miroir sans tain et visualisés sur l'écran de visée, l'opérateur déclenche une capture d'image au moyen du bouton de déclenchement.

Si la position verticale du réticule présent sur l'écran de visée ne coïncide plus avec les images des yeux du porteur vus à travers le miroir sans tain et visualisés sur l'écran de visée, l'opérateur reprend à l'étape a).

Les autres étapes c), d) du procédé se déroulent de la même façon que dans le premier mode de réalisation décrit.

On peut aussi envisager en variante d'utiliser un réticule dynamique incrusté numériquement dans l'image visualisée sur l'écran de visée ou encore un pointeur lumineux alors projeté sur le miroir sans tain du côté de l'appareil de capture d'image.

Selon une quatrième variante appartenant à ladite deuxième famille de modes de réalisation, l'appareil de capture d'image ne comporte pas de source lumineuse, telle qu'une diode, apte à attirer le regard du porteur. L'appareil ne comporte pas non plus d'inclinomètre embarqué adapté à fournir à l'opérateur un signal représentatif de la valeur prise par l'angle d'assiette ALPHA, ni de réticule horizontal fixe placé à une position verticale prédéfinie sur l'écran de visée.

L'appareil de capture d'image est placé derrière un miroir sans tain dans lequel le porteur se regarde. L'opérateur demande au porteur de fixer le reflet de ses yeux dans le miroir sans tain. Ce miroir sans tain est un miroir ayant par exemple un coefficient de réflexion de 50% du côté du porteur, et de 10 à 25% du côté de l'opérateur. L'opérateur voit donc à la fois son propre reflet dans le miroir sans tain et le porteur à travers ce miroir sans tain.

L'opérateur est positionné à une distance d'environ 1 mètre du porteur. Il place l'appareil de capture d'image face au porteur, de l'autre côté du miroir sans tain, de telle sorte que la position verticale de l'image du reflet de la pupille de l'appareil de capture d'image sur l'écran de visée coïncide avec les images des yeux du porteur vus à travers le miroir sans tain et visualisées sur l'écran de visée.

Ce réglage permet d'ajuster simultanément l'altitude et l'angle d'assiette de l'appareil de capture d'image. L'opérateur déclenche ensuite la capture d'une image en appuyant sur le bouton de déclenchement.

En variante, on peut prévoir que le déclenchement de la capture d'image provoque une atténuation de l'éclairage ambiant du côté de l'opérateur afin de limiter l'intensité du reflet de l'opérateur sur l'image capturée.

Les autres étapes c), d) du procédé se déroulent de la même façon que dans le premier mode de réalisation décrit.

On peut aussi envisager en variante d'utiliser un réticule fixe ou dynamique incrusté numériquement dans l'image visualisée sur l'écran de visée ou encore un pointeur lumineux alors projeté sur le miroir sans tain du côté de l'appareil de capture d'image pour faciliter le cadrage des yeux du porteur.

Dans toutes les variantes du premier mode de réalisation de la deuxième famille précédemment décrites, le procédé permet de placer l'appareil de capture d'image, à la même altitude que les yeux OD, OG du porteur, dans un plan sensiblement horizontal. Ceci permet d'éviter toute erreur de parallaxe verticale. De plus, selon ces variantes, les droites d'observation DO et de visée DV sont confondues. La droite de visée DV est elle aussi horizontale lors de la capture d'image, ce qui assure que le porteur est dans une position naturelle orthostatique.

Selon une cinquième variante appartenant à ladite deuxième famille de modes de réalisation, l'appareil de capture d'image comporte une source lumineuse, telle qu'une diode, apte à attirer le regard du porteur, qui est fixée sur un bras latéral rapporté sur l'appareil de capture d'image, à distance de celui-ci, et qui représente le point de visée de l'appareil de capture d'image.

La position de ce point de visée par rapport à la pupille de l'appareil de capture d'image est connue et choisie de sorte que la différence d'altitude entre ledit point de visée et la pupille de l'appareil de capture d'image soit telle que la droite de visée DV forme avec sa projection sur un plan horizontal un angle inférieur ou égal à 6 degrés.

L'opérateur et l'appareil de capture d'image ne font ici pas face au porteur, mais ils sont légèrement décalés sur le côté par rapport au porteur.

Le procédé se déroule néanmoins de la façon décrite dans le premier mode de réalisation, selon les étapes a), b), c) et d), ce qui permet à l'opérateur de placer l'appareil de capture d'image à la même altitude que les yeux du porteur et de capturer une image du porteur en maintenant la droite d'observation DO de l'appareil de capture d'image horizontale. Cependant, dans ce cas la droite de visée DV et la droite d'observation DO ne sont pas confondues, et le porteur peut ne pas être dans une position orthostatique naturelle.

On peut comme dans le premier mode de réalisation envisager en variante d'utiliser un réticule dynamique incrusté numériquement dans l'image visualisée sur l'écran de visée ou encore un pointeur lumineux projeté sur le visage du porteur pour les réglages d'altitude et d'angle d'assiette ALPHA de l'appareil.

Selon une sixième variante appartenant à la deuxième famille de modes de réalisation, l'appareil de capture d'image ne comporte pas de source lumineuse, telle qu'une diode, apte à attirer le regard du porteur. L'opérateur dispose en plus de l'appareil de capture d'image d'un point de visée matérialisé par un repère situé par exemple sur un mur ou sur une colonne pouvant être déplacée. Ce repère est de préférence réglable en hauteur, ou comprend plusieurs repères échelonnés en hauteur. Alternativement, il peut s'agir d'un repère lointain marquant la ligne d'horizon, situé à plus de 5 mètres du porteur.

En variante, un miroir vertical peut également être utilisé, le porteur fixant alors le reflet de ses yeux dans ce miroir.

L'appareil de capture d'image est équipé comme dans le premier mode de réalisation d'un inclinomètre électronique embarqué adapté à fournir à l'opérateur un signal représentatif de la valeur prise par l'angle d'assiette ALPHA à tout moment.

En variante, on peut envisager d'utiliser de la même manière un niveau à bulle en remplacement de l'inclinomètre électronique.

L'écran de visée de l'appareil de capture d'image comprend un réticule horizontal fixe placé à une position verticale prédéfinie sur l'écran.

Avant toute mesure, une étape d'étalonnage de l'inclinomètre doit être réalisée. Cette étape d'étalonnage est faite avant la première mesure, et il n'est pas nécessaire de la renouveler avant chaque mesure. Pour cela, on place l'appareil de capture d'image à la distance de capture d'image DM habituelle qui est d'environ 1 mètre, et à la même altitude que celle choisie pour le repère servant de point de visée. On positionne l'appareil de capture d'image de tel sorte que le réticule coïncide avec ce repère visualisé sur l'écran de visée, et on enregistre cette position comme zéro de l'inclinomètre.

Cet étalonnage peut alternativement être réalisé devant un miroir en faisant coïncider la position verticale du réticule et de l'image du reflet de la pupille de l'appareil de capture d'image sur l'écran de visée.

Selon la position verticale choisie pour le réticule, l'angle d'assiette ALPHA est nul au zéro de l'inclinomètre, ou est non nul au zéro de l'inclinomètre 6. Dans les deux cas, la droite d'observation DO reliant le capteur de l'appareil de capture d'image et la pupille RC de l'oeil OD du porteur est horizontale, et le procédé de prise de mesure se déroule de la façon décrite ci-dessous.

L'opérateur positionne la paire de lunettes de présentation 10 sur le visage du porteur. Le porteur est assis ou debout, avec sa tête droite, face au mur portant le repère servant de point de visée. L'opérateur se saisit de l'appareil de capture d'image et cadre le visage du porteur. L'opérateur demande au porteur de fixer le repère servant de point de visée. L'opérateur et donc l'appareil de capture d'image se trouvent dans une position décalée sur le côté par rapport au porteur pour que celui-ci puisse fixer le repère sur le mur.

Le procédé se déroule ensuite de la manière décrite dans le premier mode de réalisation de ladite deuxième famille, selon les étapes a), b), c) et d).

En variante, on peut envisager, comme dans le premier mode de réalisation de ladite deuxième famille, d'utiliser un réticule dynamique incrusté numériquement dans l'image visualisée sur l'écran de visée ou encore un pointeur lumineux projeté sur le visage du porteur afin d'effectuer les réglages d'altitude et d'angle d'assiette ALPHA.

La présente invention n'est nullement limitée aux modes de réalisation décrits et représentés, mais l'homme du métier saura y apporter toute variante conforme à son esprit.

Des points caractéristiques du visage du porteur différents des yeux du porteur peuvent par exemple être utilisés pour les réglages de l'appareil de capture d'image.

De plus, l'opérateur peut par exemple effectuer l'étape b) de réglage de l'angle d'assiette ALPHA avant l'étape a) de réglage de l'altitude de l'appareil de capture d'image dans chaque mode de réalisation ou variante où ces deux étapes sont distinctes. Avec l'habitude, l'opérateur peut aussi réaliser les deux étapes simultanément.

## Revendications

1. Procédé de mesure d'au moins un paramètre géométrico-physionomique (H, TETA) d'implantation d'une monture (10) de lunettes de correction visuelle sur le visage d'un porteur, comprenant au moins une capture d'une image numérique du visage du porteur équipé de la monture (10) au moyen d'un capteur d'image d'un appareil de capture d'image (200) et un traitement de l'image capturée pour déterminer le paramètre géométrico-physionomique (H, TETA), **caractérisé**
- **en ce que**, l'appareil de capture d'image (200) étant du type portable tenu manuellement par un opérateur, on délivre à l'opérateur une information de compensation d'un angle d'assiette (ALPHA) formé entre un axe optique (AO) de l'appareil de capture d'image (200) et sa projection dans un plan horizontal (PF) et l'opérateur positionne manuellement, préalablement à la capture d'image, l'appareil de capture d'image (200) dans une première configuration dans laquelle une droite d'observation (DO) reliant la pupille (7) de l'appareil de capture d'image (200) et un point remarquable prédéterminé (RC), directement ou indirectement associé au visage du porteur ou à la monture, est sensiblement horizontale,
- **en ce que** la capture d'image est réalisée dans une seconde configuration de l'appareil de capture d'image (200), identique à ou distincte de la première configuration, telle que l'altitude dudit appareil de capture d'image (200) est identique à celle de la première configuration, et
- **en ce que** le calcul du paramètre géométrico-physionomique (H, TETA) comporte une identification, sur cette image, de l'image du point remarquable prédéterminé (RC).

2. Procédé selon la revendication précédente, dans lequel le positionnement manuel de l'appareil de capture d'image (200) comporte les sous-étapes suivantes :
a1) mesure, par un moyen de mesure d'inclinaison (6) embarqué équipant l'appareil de capture d'image (200), de l'angle d'assiette (ALPHA),
a2) ajustement, par l'opérateur, de cet angle d'assiette,
a3) l'opérateur visualisant en temps réel une image à capturer sur des moyens de visualisation (4), ajustement, par l'opérateur, de l'altitude de l'appareil de capture d'image (200) pour régler à une valeur donnée la position verticale relative d'un point remarquable de l'image à capturer du visage du porteur visualisée par l'opérateur sur des moyens de visualisation (4), par rapport à un référentiel des moyens de visualisation ou par rapport à l'image de la projection, sur le visage du porteur, d'un pointeur (250) lumineux actif solidaire de l'appareil de capture d'image (200), ladite valeur donnée de position verticale étant définie, à l'étalonnage ou dynamiquement, en fonction de l'angle d'assiette (ALPHA) après ajustement.

3. Procédé selon la revendication 1, dans lequel, pour le positionnement manuel de l'appareil de capture d'image (200), l'opérateur ajuste l'angle d'assiette (ALPHA) et ladite position verticale du point remarquable de l'image à capturer à des valeurs prédéterminées.

4. Procédé selon la revendication 1, dans lequel, pour le positionnement manuel de l'appareil de capture d'image (200), un moyen d'information (15) dépendant du moyen de mesure d'inclinaison (6) embarqué donne à l'opérateur une information sur la position angulaire de l'appareil de capture d'image (200) par rapport à une valeur prédéterminée de l'angle d'assiette (ALPHA).

5. Procédé selon la revendication précédente, dans lequel ladite valeur prédéterminée de l'angle d'assiette (ALPHA) est nulle.

6. Procédé selon l'une des revendications 1 à 5, dans lequel l'ajustement d'altitude de l'appareil de capture d'image (200) est réalisé par mise à la même position verticale, d'une part, d'une mire (41) disposée sur les moyens de visualisation (4) et, d'autre part, du point remarquable de l'image à capturer du visage du porteur visualisée par l'opérateur sur les moyens de visualisation (4).

7. Procédé selon la revendication précédente, dans lequel ladite mire est dynamiquement incrustée, par un moyen d'affichage numérique appartenant aux moyens de visualisation (4), sur l'image à capturer à une position verticale ajustée en temps réel par traitement numérique en fonction de l'angle d'assiette (ALPHA) mesuré par le moyen de mesure d'inclinaison (6) embarqué.

8. Procédé selon l'une des revendications 2 à 5, dans lequel l'ajustement d'altitude de l'appareil de capture d'image (200) est réalisé par mise à la même position verticale, d'une part, de l'image de la projection, sur le visage du porteur, d'un pointeur (250) actif solidaire de l'appareil de capture d'image (200) et, d'autre part, du point remarquable de l'image à capturer du visage du porteur visualisée par l'opérateur sur les moyens de visualisation (4).

9. Procédé selon l'une des revendications précédentes, dans lequel le porteur fixe du regard un point de visée (5;9) formant avec un oeil du porteur (OD) une droite de visée (DV) sensiblement horizontale.

10. Procédé selon la revendication précédente, dans lequel le point de visée (5;9) est porté par l'appareil de capture d'image (200) et est séparé verticalement de la pupille (7) de l'appareil de capture d'image (200) d'une hauteur inférieure à 10 centimètres ou telle que, dans la première configuration, la droite de visée (DV) forme avec sa projection sur un plan horizontal un angle inférieur ou égal à 6 degrés.

## Patentansprüche

1. Verfahren zur Messung mindestens eines geometrisch-physiognomischen Parameters (H, TETA) zur Anordnung eines Gestells (10) einer Sichtkorrekturbrille auf dem Gesicht eines Trägers, das mindestens eine Erfassung eines digitalen Bilds des mit dem Gestell (10) ausgestatteten Gesichts des Trägers mittels eines Bildsensors eines Bilderfassungsgeräts (200) und eine Verarbeitung des erfassten Bilds enthält, um den geometrisch-physiognomischen Parameter (H, TETA) zu bestimmen, **dadurch gekennzeichnet,**
- **dass**, wenn das Bilderfassungsgerät (200) vom tragbaren, manuell vom einem Bediener gehaltenen Typ ist, dem Bediener eine Kompensationsinformation eines Neigungswinkels (ALPHA) geliefert wird, der zwischen einer optischen Achse (AO) des Bilderfassungsgeräts (200) und ihrer Projektion in einer waagrechten Ebene (PF) gebildet wird, und der Bediener vor der Bilderfassung das Bilderfassungsgerät (200) manuell in einer ersten Konfiguration positioniert, in der eine Beobachtungsgerade (DO), die die Pupille (7) des Bilderfassungsgeräts (200) und einen bestimmten Kennpunkt (RC) verbindet, der direkt oder indirekt dem Gesicht des Trägers oder dem Gestell zugeordnet ist, im Wesentlichen waagrecht ist,
- **dass** die Bilderfassung in einer zweiten Konfiguration des Bilderfassungsgeräts (200) gleich der oder anders als die erste Konfiguration so durchgeführt wird, dass die Höhe des Bilderfassungsgeräts (200) gleich der der ersten Konfiguration ist, und
- **dass** die Berechnung des geometrisch-physiognomischen Parameters (H, TETA) eine Identifizierung des Bilds des vorbestimmten Kennpunkts (RC) in diesem Bild aufweist.

2. Verfahren nach dem vorhergehenden Anspruch, wobei die manuelle Positionierung des Bilderfassungsgeräts (200) die folgenden Teilschritte aufweist:
a1) Messung des Neigungswinkels (ALPHA) durch eine eingebaute Neigungsmesseinrichtung (6), mit der das Bilderfassungsgerät (200) ausgerüstet ist,
a2) Justierung dieses Neigungswinkels durch den Bediener,
a3) da der Bediener in Echtzeit ein zu erfassendes Bild auf Visualisierungseinrichtungen (4) visualisiert, Justierung, durch den Bediener, der Höhe des Bilderfassungsgeräts (200), um die relative senkrechte Stellung eines Kennpunkts des vom Bediener auf Visualisierungseinrichtungen (4) visualisierten zu erfassenden Bilds des Gesichts des Trägers bezüglich eines Bezugssystems der Visualisierungseinrichtungen oder bezüglich des Bilds der Projektion, auf dem Gesicht des Trägers, eines aktiven Leuchtzeigers (250), der fest mit dem Bilderfassungsgerät (200) verbunden ist, auf einen gegebenen Wert zu regeln, wobei der gegebene Wert der senkrechten Stellung bei der Kalibrierung oder dynamisch abhängig vom Neigungswinkel (ALPHA) nach Justierung definiert wird.

3. Verfahren nach Anspruch 1, wobei der Bediener zur manuellen Positionierung des Bilderfassungsgeräts (200) den Neigungswinkel (ALPHA) und die senkrechte Stellung des Kennpunkts des zu erfassenden Bilds auf vorbestimmte Werte justiert.

4. Verfahren nach Anspruch 1, wobei eine von der eingebauten Neigungsmesseinrichtung (6) abhängende Informationseinrichtung (15) dem Bediener eine Information über die Winkelstellung des Bilderfassungsgeräts (200) bezüglich eines vorbestimmten Werts des Neigungswinkels (ALPHA) zur manuellen Positionierung des Bilderfassungsgeräts (200) liefert.

5. Verfahren nach dem vorhergehenden Anspruch, wobei der vorbestimmte Wert des Neigungswinkels (ALPHA) null ist.

6. Verfahren nach einem der Ansprüche 1 bis 5, wobei die Höhenjustierung des Bilderfassungsgeräts (200) durch Versetzen einerseits einer auf den Visualisierungseinrichtungen (4) angeordneten Messlatte (41) und andererseits des Kennpunkts des zu erfassenden Bilds des Gesichts des Trägers, das vom Bediener auf den Visualisierungseinrichtungen (4) visualisiert wird, in die gleiche senkrechte Stellung durchgeführt wird.

7. Verfahren nach dem vorhergehenden Anspruch, wobei die Messlatte durch eine zu den Visualisierungseinrichtungen (4) gehörende digitale Anzeigeeinrichtung auf dem zu erfassenden Bild in einer senkrechten Stellung dynamisch eingebettet wird, die in Echtzeit durch digitale Verarbeitung abhängig vom Neigungswinkel (ALPHA) justiert wird, der von der eingebauten Neigungsmesseinrichtung (6) gemessen wird.

8. Verfahren nach einem der Ansprüche 2 bis 5, wobei die Höhenjustierung des Bilderfassungsgeräts (200) durch Versetzen einerseits des Bilds der Projektion eines fest mit dem Bilderfassungsgerät (200) verbundenen aktiven Zeigers (250) auf dem Gesicht des Trägers und andererseits des Kennpunkts des zu erfassenden Bilds des Trägers, das vom Bediener auf den Visualisierungseinrichtungen (4) visualisiert wird, in die gleiche senkrechte Stellung durchgeführt wird.

9. Verfahren nach einem der vorhergehenden Ansprüche, wobei der Träger einen Zielpunkt (5; 9) fixiert, der mit einem Auge des Trägers (OD) eine im Wesentlichen waagrechte Zielgerade (DV) bildet.

10. Verfahren nach dem vorhergehenden Anspruch, wobei der Zielpunkt (5; 9) vom Bilderfassungsgerät (200) getragen wird und senkrecht von der Pupille (7) des Bilderfassungsgeräts (200) um eine Höhe geringer als 10 Zentimeter oder derart getrennt ist, dass in der ersten Konfiguration die Zielgerade (DV) mit ihrer Projektion auf einer waagrechten Ebene einen Winkel geringer als oder gleich 6 Grad bildet.

## Claims

1. A method of measuring at least one geometrico-physionomic parameter (H, TETA) concerning the positioning on the face of a wearer of a frame (10) for vision-correcting eyeglasses, the method comprising capturing at least one digital image of the wearer's face wearing the frame (10) by means of an image sensor of an image capture appliance (200), and processing the captured image to determine the geometrico-physionomic parameter (H, TETA), the method being **characterized in that**:
- the image capture appliance (200) being of the portable type held in the hand by an operator, one delivers information to the operator for compensating the tilt angle (ALPHA) formed between an optical axis (AO) of the image capture appliance (200) and its projection onto a horizontal plane (PF) and prior to capturing an image, the operator manually positions the image capture appliance (200) in a first configuration in which a line of observation (DO) connecting the pupil (7) of the image capture appliance (200) to a predetermined remarkable point (RC) directly or indirectly associated with the wearer's face or with the frame is substantially horizontal;
- the image is captured in a second configuration of the image capture appliance (200) identical to or distinct from the first configuration, such that the altitude of said image capture appliance (200) is identical to its altitude in the first configuration; and
- the calculation of the geometrico-physionomic parameter (H, TETA) includes identifying, in this image, the image of the predetermined remarkable point (RC).

2. The method according to the preceding claim, wherein the manual positioning of the image capture appliance (200) comprises the following substeps:
- a1) measuring the tilt angle (ALPHA) by means of a on-board tilt-measuring means (6) fitted to the image capture appliance (200);
- a2) the operator adjusting said tilt angle; and
- a3) the operator viewing in real time an image to be captured on viewing means (4), the operator adjusting the altitude of the image capture appliance (200) to adjust the vertical position of a remarkable point of the image to be captured of the wearer's face viewed by the operator on the viewing means (4) relative to a reference of the viewing means or relative to the image of the projection on the wearer's face of an active light pointer (250) secured to the image capture appliance (200), to a given value, which given vertical position value is defined on calibration or dynamically as a function of the tilt angle (ALPHA) after adjustment.

3. The method according to claim 1, wherein, for manual positioning of the image capture appliance (200), the operator adjusts the tilt angle (ALPHA) and said vertical position of the remarkable point of the image to be captured to predetermined values.

4. The method according to claim 1, wherein, for manual positioning of the image capture appliance (200), information means (15) depending on the on-board tilt-measuring means (6) inform the operator about the angular position of the image capture appliance (200) relative to a predetermined value for the tilt angle (ALPHA).

5. The method according to the preceding claim, wherein said predetermined value for the tilt angle (ALPHA) is zero.

6. The method according to any one of claims 1 to 5, wherein the altitude of the image capture appliance (200) is adjusted by putting crosshairs (41) placed on the viewing means (4) into the same vertical position as the remarkable point of the image to be captured of the wearer's face viewed by the operator on the viewing means (4) .

7. The method according to the preceding claim, wherein said crosshairs are dynamically inlaid by digital display means forming part of the viewing means (4), on the image to be captured at a vertical position that is adjusted in real time by digital processing as a function of the tilt angle (ALPHA) measured by the on-board inclination-measurement means (6).

8. The method according to any one of claims 2 to 5, wherein the altitude of the image capture appliance (200) is adjusted by putting the image of the projection on the wearer's face of an active pointer (250) secured to the image capture appliance (200) into the same vertical position as the remarkable point of the image to be captured of the wearer's face viewed by the operator on the viewing means (4).

9. The method according to any one of the preceding claims, wherein the wearer gazes at a sighting point (5; 9) that, together with one of the wearer's eyes (OD), forms a line of sight (DV) that is substantially horizontal.

10. The method according to the preceding claim, wherein the sighting point (5; 9) is carried by the image capture appliance (200) and is vertically separated from the pupil (7) of the image capture appliance (200) by a height of less than 10 centimeters, or such that in the first configuration, the line of sight (DV) forms an angle less than or equal to 6 degrees with its projection onto a horizontal plane.
